# EUROPEAN PATENT APPLICATION

(11) **EP 2 860 624 A1**
(43) Date of publication of application: **15.04.2015**
(21) Application number: 14179409.9
(22) Date of filing: 31.07.2014
(51) Int. Cl.: G06F 9/44

(54) **Terminal apparatus and method for connecting to virtual server in virtual desktop infrastructure**

(30) Priority: 11.10.2013 KR 20130121543
(71) Applicant: Samsung Electronics Co., Ltd, Gyeonggi-do 443-742 (KR)
(72) Inventor: Kang, Du-seong, Gyeonggi-do (KR); Kim, Hyun-kyu, Seoul (KR); Bang, Dae-myung, Gyeonggi-do (KR)
(74) Representative: Taor, Simon Edward William

(57) **Abstract**

A terminal apparatus and a method for connecting to a virtual server in a virtual desktop infrastructure (VDI) are disclosed. A control method of a terminal apparatus which uses a virtual machine (VM) of a virtual server in a VDI includes: receiving input of VDI connection information to connect to the virtual server; connecting to the virtual server based on the VDI connection information; determining whether or not a predetermined event occurs in a state in which the terminal apparatus is connected to the virtual server and entering a standby mode; and, when a user command to enter an activation mode is received in the standby mode, reconnecting to the virtual server based on the VDI connection information. Accordingly, when the terminal apparatus converts from the standby mode to the activation mode in the VDI, the terminal apparatus can easily reconnect to the disconnected virtual server.

## Description

Apparatuses and methods consistent with exemplary embodiments relate to a terminal apparatus and a method for connecting to a virtual server in a virtual desktop infrastructure (VDI), and more particularly, to a terminal apparatus and a method for reconnecting to a virtual server which has been disconnected in a VDI.

It is common that, when a terminal apparatus connected to a virtual server in a VDI enters a standby mode, the terminal apparatus is disconnected from the virtual server. When the terminal apparatus is disconnected from the virtual server as its mode is converted into the standby mode, the user typically is required to re-perform an initial operating process for connecting to the virtual server via the terminal apparatus in order to reconnect to the virtual server via the terminal apparatus.

In particular, the user is typically required to re-request executing a VDI application to connect to the virtual server via the terminal apparatus and then required to re-input an identification (ID) and a password. Accordingly, the terminal apparatus re-executes the VDI application and then requests reconnection to the virtual server based on the ID and the password inputted by the user.

As described above, the conventional terminal apparatus in the VDI typically repeats a series of processes that has been previously performed to connect to the virtual server in order to reconnect to the virtual server every time that the terminal apparatus enters the standby mode and is disconnected from the virtual server.

Furthermore, the user is typically required to re-execute the VDI application and to re-input user information, such as an ID and a password, via the terminal apparatus every time that the terminal apparatus enters the standby mode, which thusly may cause a reduction in continuity and efficiency of performance of the user's tasks.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a terminal apparatus and a method for effectively reconnecting to a virtual server which has been disconnected from the terminal apparatus in a VDI.

According to an aspect of an exemplary embodiment, there is provided a control method which is executable by a terminal apparatus which uses a virtual machine (VM) of a virtual server in a VDI, the control method including: receiving VDI connection information which relates to connecting to the virtual server; connecting to the virtual server based on the received VDI connection information; determining whether or not a predetermined event occurs in a state in which the terminal apparatus is connected to the virtual server and entering a standby mode; and, when a user command to enter an activation mode is received in the standby mode, reconnecting to the virtual server based on the received VDI connection information.

The control method may further include, when the terminal apparatus connects to the virtual server based on the VDI connection information, storing, in a non-volatile memory, authentication information which includes the VDI connection information, and the VDI connection information may include address information which relates to the virtual server and user information comprising an ID and a password.

The storing the authentication information may include, when a plurality of VMs are available via the connected virtual server, including identification information which relates to a VM selected by a user in the authentication information and storing the included identification information in the non-volatile memory.

The storing the authentication information may include encrypting the user information included in the authentication information and storing the encrypted user information.

The reconnecting to the virtual server may include, when the terminal apparatus is operated using a general-purpose operating system (OS), executing a VDI application in order to enter the VDI and then reconnecting to the virtual server.

The entering the standby mode may include storing mode state information which indicates whether the standby mode is a screen off state, a power off state, or an activation standby state, and the reconnecting to the virtual server may include, when a user command to enter the activation mode is received, using the stored mode state information to reconnect to the virtual server based on whether or not the standby mode is the activation standby state.

According to an aspect of another exemplary embodiment, there is provided a terminal apparatus which uses a VM of a virtual server in a VDI, the terminal apparatus including: an input part configured to receive VDI connection information which relates to connecting to the virtual server; a communicator configured to connect to the virtual server based on the received VDI connection information; a storage configured to store authentication information comprising the received VDI connection information; a mode converter configured to enter a standby mode based on whether or not a predetermined event occurs; and, a controller which, when the terminal apparatus enters the standby mode in a state in which the terminal apparatus is connected to the virtual server, is configured to reconnect to the virtual server based on the authentication information stored in the storage according to whether a user command to enter the activation mode is received via the input part.

The storage may include a non-volatile memory, and the VDI connection information may include address information which relates to the virtual server and user information comprising an ID and a password.

When a plurality of VMs are available via the connected virtual server, the controller may be further configured to include identification information which relates to a VM selected by a user in the authentication information and to store the included identification information in the storage.

The controller may be further configured to encrypt the user information included in the authentication information and to store the encrypted user information in the storage.

When the terminal apparatus is operated using a general-purpose OS, the controller may be further configured to execute a VDI application in order to enter the VDI and then to reconnect to the virtual server.

When the terminal apparatus enters the standby mode via the mode converter, the controller may be further configured to store, in the storage, mode state information which indicates whether the standby mode is a screen off state, a power off state, or an activation standby state, and, when a user command to enter the activation mode is received, the controller may be further configured to use the stored mode state information to reconnect to the virtual server based on whether or not the standby mode is the activation standby state.

According to an aspect of the invention, there is provided a control method of a terminal apparatus as set out in claim 1. Preferred features are set out in claims 2 to 6.

According to an aspect of the invention, there is provided a terminal apparatus as set out in claim 7. Preferred features are set out in claims 8 to 12.

According to the various exemplary embodiments as described above, when the terminal apparatus converts from the standby mode to the activation mode in the VDI, the terminal apparatus can easily reconnect to the disconnected virtual server.

The above and/or other aspects will be more apparent by describing in detail exemplary embodiments, with reference to the accompanying drawings, in which:
FIG. 1 is a chart which illustrates a process for connecting a terminal apparatus and a virtual server in a VDI, according to an exemplary embodiment;
FIG. 2 is a block diagram which illustrates a terminal apparatus which connects to a virtual server in a VDI, according to an exemplary embodiment;
FIG. 3 is a view which illustrates an example of a storage of a terminal apparatus, according to an exemplary embodiment;
FIG. 4 is a flowchart which illustrates a control method which is executable by a terminal apparatus which connects to a virtual server in a VDI, according to an exemplary embodiment;
FIG. 5 is a flowchart which illustrates a method which is executable by a terminal apparatus for connecting to a virtual server in a VDI, according to an exemplary embodiment; and
FIG. 6 is a flowchart which illustrates a method which is executable by a terminal apparatus for connecting to a virtual server in a VDI, according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail, because they would obscure the exemplary embodiments with unnecessary detail.

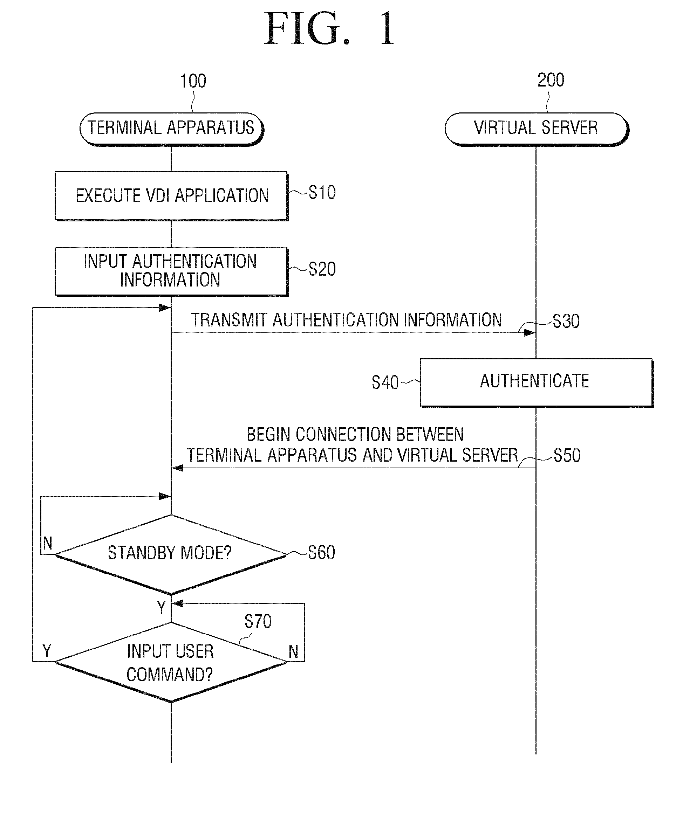

FIG. 1 is a chart which illustrates a process for connecting a terminal apparatus and a virtual server in a VDI, according to an exemplary embodiment.

As shown in FIG. 1, in operation S10, a terminal apparatus 100 executes a VDI application based on a user command. The terminal apparatus 100 may include an apparatus that is capable of communicating in a wireless and/or wired manner, and may include, for example, any one or more of a desktop, a tablet personal computer (PC), and/or a smart television (TV), and/or any other suitable type of device or apparatus. The VDI application includes an execution program that uses a virtual machine (VM) which is established in a virtual server 200 in a VDI. The VM established in the virtual server 200 may include a virtual operating system (OS). Accordingly, the user submits a request for the terminal apparatus 100 to execute the VDI application in order to use the VM, which includes the virtual OS established in the virtual server 200, via the terminal apparatus 100.

Accordingly, the terminal apparatus 100 may execute the pre-installed VDI application in response to such a user request. When the VDI application is executed, the user inputs VDI connection information in order to connect to the virtual server 200 via an input apparatus (not shown), such as, for example, a keyboard. The VDI connection information may include, for example, address information which relates to the virtual server 200 and user information which includes an ID and a password. When the VDI connection information is received in operation S20, then in operation S30, the terminal apparatus 100 transmits, to the virtual server 200, authentication request information which includes the user information based on the address information included in the VDI connection information.

In operation S40, the virtual server 200, which has received the authentication request information, performs user authentication by determining whether or not the user information included in the received authentication request information includes previously registered user information, with reference to previously registered user information which relates to a plurality of users.

When the user authentication is performed, the virtual server 200 transmits an authentication informing message informing that the user authentication is completed to the terminal apparatus 100. In operation S50, the terminal apparatus 100, which has received the authentication informing message, requests connecting to the virtual server 200 such that a connection is established between the terminal apparatus 100 and the virtual server 200. When the terminal apparatus 100 is connected to the virtual server 200 as described above, the terminal apparatus 100 may enter a virtual OS environment via the VM which is established in the virtual server 200.

When the connection between the terminal apparatus 100 and the virtual server 200 is established, the terminal apparatus 100 stores the VDI connection information which includes the address information which relates to the virtual server 200 and the user information. Then, the terminal apparatus 100 may encrypt the ID and the passwords, which are the user information. The ID and the password may be encrypted by using a well-known encryption algorithm.

When the connection between the terminal apparatus 100 and the virtual server 200 is established as described above, in operation S6o, the terminal apparatus 100 determines whether or not to convert a mode into a standby mode based on whether or not a predetermined event occurs. According to an exemplary embodiment, the predetermined event may include, for example, an event in which a user command is not received from the user for a predetermined threshold time. When a user command is not received for the predetermined threshold time as described above, the terminal apparatus 100 determines that the terminal apparatus 100 is in an inactivation state, and converts from an activation mode to a standby mode.

The activation mode may be a mode in which the connection between the terminal apparatus 100 and the virtual server 200 is maintained, and the standby mode may be a mode in which the terminal apparatus 100 and the virtual server 200 are disconnected from each other. When the operation mode of the terminal apparatus 100 converts from the activation mode to the standby mode, in operation S70, the terminal apparatus 100 determines whether or not a user command to enter the activation mode is received. When the user command to enter the activation mode is received, the terminal apparatus 100 reconnects to the virtual server 200 based on pre-stored authentication information.

As described above, when the terminal apparatus 100, which has been once connected to the virtual server 200 in the VDI, converts from the standby mode to the activation mode, the terminal apparatus 200 can reconnect to the disconnected virtual server 200.

As described above, when the terminal apparatus 100 returns to the activation mode after having entered the standby mode in the VDI, the terminal apparatus 100 can reconnect to the virtual server 200 without repeating the authentication process which has previously been performed to connect to the virtual sever 200, so that the user can use the VDI more easily.

Hereinafter, elements of a terminal apparatus 100 which connects to a virtual server 200 in a VDI according to an exemplary embodiment will be described in detail.

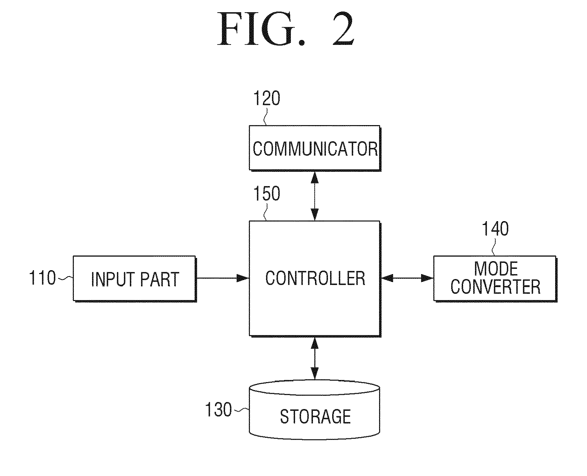

FIG. 2 is a block diagram which illustrates a terminal apparatus which connects to a virtual server in a VDI, according to an exemplary embodiment.

As shown in FIG. 2, a terminal apparatus 100 which connects to a virtual server 200 of a VDI includes an input part (also referred to herein as an "inputter") 110, a communicator 120, a storage 130, a mode converter 140, and a controller 150.

The input part 110 receives an input of VDI connection information for connecting to the virtual server 200 of the VDI from a user via an input apparatus (not shown), such as, for example, a keypad. The VDI connection information may include address information which relates to the virtual server 200 and user information which includes a user ID and a password. The input part 110 may receive an execution command which relates to a VDI application in order to connect to the virtual server 200 in the VDI prior to receiving the input of the VDI connection information. When the execution command is received, the controller 150, which will be described below, executes a predetermined VDI application. Accordingly, when the terminal apparatus 100 enters a VDI execution environment, the user may input the VDI connection information in order to connect to the virtual server 200 of the VDI via the input apparatus (not shown).

The communicator 120 connects to the virtual server 200 based on the VDI connection information which is received via the input part 110. In particular, the communicator 120 transmits authentication request information, including the user information, to the virtual server 200 based on the address information included in the VDI connection information. Then, when an authentication informing message informing that user authentication is completed is received from the virtual server 200 to which the authentication request information has been transmitted, the communicator 120 requests connecting to the virtual server 200 based on a control command of the controller 150. Accordingly, a connection between the terminal apparatus 100 and the virtual server 200 is completed.

The communicator 120 may communicate with the virtual server 200 via any one or more of various communication protocols, such as, for example, a Hyper Text Transfer Protocol (HTTP), an Extensible Messaging and Presence Protocol (XMPP), a Secure Sockets Layer (SSL), a File Transfer Protocol (FTP), Content Centric Networking (CCN), and/or any other suitable communication protocol. However, this should not be considered as limiting. The communicator 110 may communicate with the virtual server 200 according to any one or more of various wireless communication standards, such as, for example, wireless fidelity (Wi-Fi), 3rd Generation (3G), a 3rd Generation Partnership Project (3GPP), a Long Term Evolution (LTE), and/or any other suitable wireless communication standard.

The storage 130 stores authentication information, including the VDI connection information which is received via the input part 110. In particular, when the authentication informing message informing that the user authentication is completed based on the VDI connection information received via the input part 110 is received from the virtual server 200, the storage 130 may store the authentication information which includes the VDI connection information. The storage 130 which stores the authentication information may be implemented by using a non-volatile memory.

Hereinafter, the authentication information stored in the storage 130 will be described in detail.

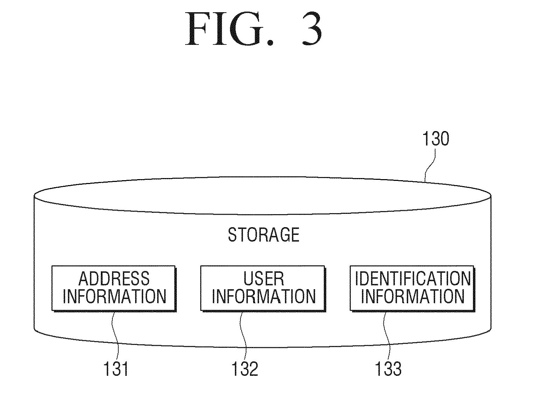

FIG. 3 is a view which illustrates an example of the storage of the terminal apparatus, according to an exemplary embodiment.

As shown in FIG. 3, the storage 130 may include address information 131 which relates to the already connected virtual server 200, user information 132 which includes an ID and a password, and identification information 133 regarding a VM.

As described above, the address information 131 and the user information 132 may include information which relates to connecting to one of a plurality of virtual servers in which VMs, which are virtual OSs in the VDI, are established, in response to a user request. When a plurality of VMs are established in the corresponding virtual server 200, the identification information 133 may include information which indicates a VM that is selected from among the plurality of VMs, in response to a user request.

The ID and the password included in the user information 132 may be encrypted and stored in the storage 130. The ID and the password may be encrypted by using a well-known encryption algorithm.

Referring back to FIG. 2, the mode converter 140 enters a standby mode based on whether or not a predetermined event occurs. The predetermined event referred to herein may include, for example, an event in which a user command is not received from the user for a predetermined threshold time. When a user command is not received for the predetermined threshold time, the mode converter 140 determines that the terminal apparatus 100 is in an inactivation state and, as a result, converts from an activation mode, which is a current mode, to the standby mode. The activation mode may be a mode in which the connection between the terminal apparatus 100 and the virtual server 200 is maintained, and the standby mode may be a mode in which the terminal apparatus 100 and the virtual server 200 are disconnected from each other.

In particular, the standby mode, in which the terminal apparatus 100 and the virtual server 200 are disconnected from each other, may be any one or more of a state in which a display screen of the terminal apparatus 100 is turned off, a state in which power supplied to the terminal apparatus 100 is shut off, and/or an activation standby state for preventing power consumption.

Accordingly, when such an event occurs, the mode converter 140 may convert from the activation mode, in which the connection between the terminal apparatus 100 and the virtual server 200 is maintained, to the standby mode, in which the terminal apparatus 100 and the virtual server 200 are disconnected from each other.

When the terminal apparatus 100, which connects to the virtual server 200, enters the standby mode, the controller 150 controls the communicator 120 to reconnect to the disconnected virtual server 200 based on the authentication information which has previously been stored in the storage 130 based on whether a user command to enter the activation mode is received via the input part 110. Accordingly, the communicator 120 reconnects to the disconnected virtual server 200 based on the previously stored authentication information, so that a reconnection between the terminal apparatus 100 and the virtual server 200 can be established.

As described above, the communicator 120 transmits the authentication request information, including the user information, to the virtual server 200 based on the address information included in the VDI connection information based on a control command of the controller 150. Then, when an authentication informing message informing that user authentication is completed is received from the virtual server 200 to which the authentication request information has been transmitted, the communicator 120 requests connecting to the virtual server 200. Accordingly, when the connection between the terminal apparatus 100 and the virtual server 200 is completed, the terminal apparatus 100 may enter a virtual OS environment via the VM established in the virtual server 200.

When the connection between the terminal apparatus 100 and the virtual server 200 is completed, the controller 150 stores the authentication information, including the VDI connection information received via the input part 110, in the storage 130. At this time, the controller may encrypt the user information included in the VDI connection information, including the ID and the password, by using a well-known encryption algorithm, and then store the encrypted user information in the storage 130.

When a plurality of VMs which are able to enter the virtual OS environment exist in the virtual server 200, the controller 150 displays, on the screen, a list of VMs of the virtual server 200 connected with the terminal apparatus 100. Then, when one VM is selected from the list of VMs via the input part 110, the controller 150 may include identification information which relates to the selected VM in the authentication information which has previously been stored in the storage 130, and may store the included identification information.

When the terminal apparatus 100 which enters the virtual OS environment by using the VM of the connected virtual server 200 enters the standby mode by the mode converter 140, the controller 150 stores mode state information which indicates whether the standby mode is a screen off state, a power off state, or an activation standby state in the storage 130. The mode state information of the standby mode stored in the storage 130 is usable for determining whether a user command to enter the activation mode includes a command to reconnect to the virtual server 200 which has been disconnected from the terminal apparatus 100 or a command to boot the terminal apparatus 100.

Accordingly, when the user command to enter the activation mode is received via the input part 110, the controller 150 determines whether or not the standby mode of the terminal apparatus 100 is a mode which is related to the activation standby state, with reference to the mode state information which has previously been stored in the storage 130. When the standby mode is the mode related to the activation standby state, the controller 150 controls the communicator 120 to reconnect to the virtual server 200 which has been disconnected based on the authentication information which has previously been stored in the storage 130.

At this time, when the terminal apparatus 100 is operated by a general-purpose OS such as Window or Linux, the controller 150 may execute the VDI application in order to enter the VDI and then may control the communicator 120 to reconnect to the disconnected virtual server 200. Conversely, when the terminal apparatus 100 is operated by Thin OS or a dedicated OS which is associated with a firmware line, the VDI application to enter the VDI is automatically executed upon receiving the user command to enter the activation mode. Accordingly, when the terminal apparatus 100 is operated by Thin OS or the dedicated OS of firmware line, the controller 150 may control the communicator 120 to reconnect to the disconnected virtual serer 200 without executing the VDI application.

Accordingly, the communicator 120 may reconnect to the virtual server 200 based on the address information which relates to the virtual server 200, the user information, and the VM identification information which are included in the authentication information which has previously been stored in the storage 130.

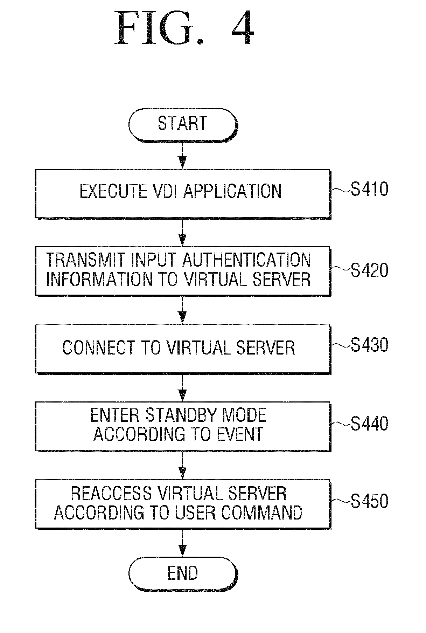

The respective elements of the terminal apparatus 100 which connects to the virtual server 200 in the VDI have been described above. Hereinafter, a control method of a terminal apparatus which connects to a virtual server 200 in a VDI will be described with reference to FIGS. 4, 5, and 6.

FIG. 4 is a flowchart which illustrates a control method which is executable by a terminal apparatus which connects to a virtual server in a VDI, according to an exemplary embodiment.

As shown in FIG. 4, in operation S410, the terminal apparatus 100 executes a VDI application in order to connect to the virtual server 200 in the VDI, in response to a user request. When VDI connection information which relates to connecting to the virtual server 200 is received after the VDI application is executed, in operation S420, the terminal apparatus 100 transmits authentication request information, including user information included in the VDI connection information, to the virtual server 200, based on address information included in the VDI connection information.

Then, in operation S430, when an authentication informing message informing that user authentication is completed is received from the virtual server 200 to which the authentication request information has been transmitted, the terminal apparatus 100 requests connecting to the virtual server 200 and begins connecting to the virtual server 200. In operation S440, the terminal apparatus 100 which is connected to the virtual server 200 determines whether or not a predetermined event occurs, and, based on a result of the determination, enters a standby mode. The predetermined event may include an event in which a user command is not received from the user for a predetermined threshold time. Accordingly, when a user command is not received for the predetermined threshold time, the terminal apparatus 100 may convert from an activation mode, in which the connection between the terminal apparatus 100 and the virtual server 200 is maintained, to a standby mode, in which the terminal apparatus 100 and the virtual server 200 are disconnected from each other.

When the terminal apparatus 100 enters the standby mode as described above and then a user command to enter the activation mode is received, in operation S450, the terminal apparatus 100 reconnects to the disconnected virtual server 200 based on authentication information which includes the VDI connection information which has been used to connect to the virtual server 200.

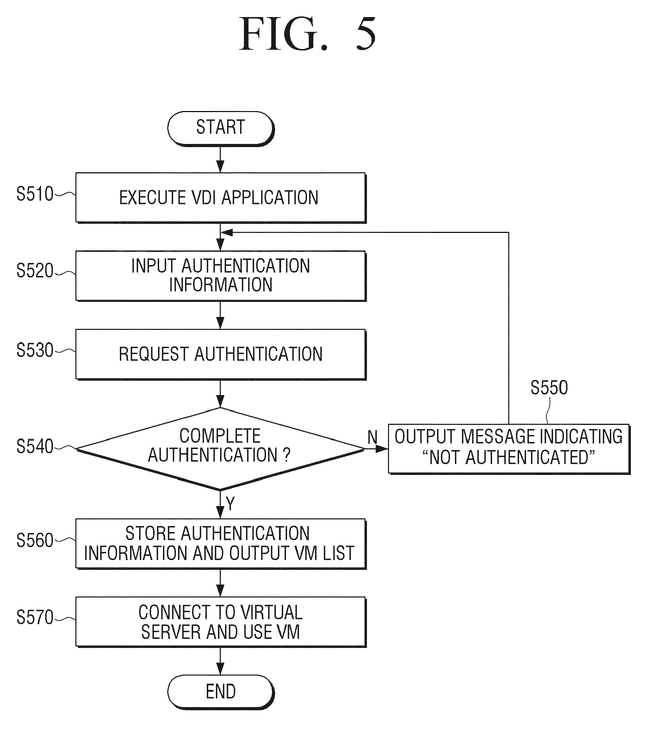

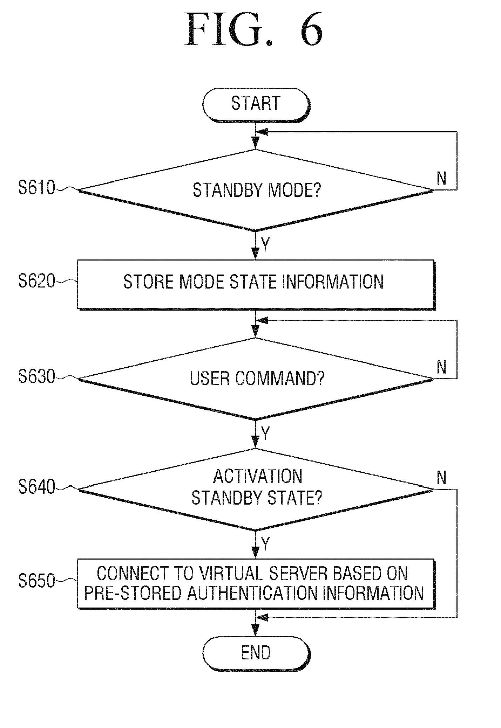

Hereinafter, a method for a terminal apparatus 100 to connect and reconnect to a virtual server 200 will be described with reference to FIGS. 5 and 6.

FIG. 5 is a flowchart which illustrates a method which is executable by a terminal apparatus for connecting to a virtual server in a VDI, according to an exemplary embodiment.

As shown in FIG. 5, in operation S510, the terminal apparatus 100 executes a VDI application in order to connect to the virtual server 200 in the VDI, in response to a user request. As described above, the VDI application includes an execution program for using a VM which is established in the virtual server 200 in the VDI. When, in operation S520, VDI connection information which includes address information which relates to the virtual server 200 and user information is received via an input apparatus (not shown) such as a keyboard after the VDI application is executed, then, in operation S530, the terminal apparatus 100 transmits authentication request information to the virtual server 200 based on the VDI connection information. The authentication request information may include user information which includes an ID and a password. The virtual server 200, which has received such authentication request information, performs user authentication by determining whether the user information included in the authentication request information includes previously registered user information, based on previously registered user information which relates to a plurality of users. After the user authentication is performed, the virtual server 200 transmits an informing message resulting from the user authentication to the terminal apparatus 100.

Accordingly, in operation S540, the terminal apparatus 100 determines whether the user authentication is performed based on the informing message received from the virtual server 200. In particular, when the informing message received from the virtual server 200 informs that the user authentication is not possible, the terminal apparatus 100 outputs a message informing that the user authentication has not been performed on the screen in operation S550. Accordingly, the user may re-input the user information or input new user information based on the message indicating that the user authentication has not been performed, and may request registration.

When the informing message received from the virtual server 200 confirms that the authentication has been completed, in operation S560, the terminal apparatus 100 stores authentication information which includes the VDI connection information and outputs a list of VMs. In particular, when the informing message received from the virtual server 200 is an authentication informing message indicating that the user authentication has been performed, the terminal apparatus 100 stores the VDI connection information, including the address information of the virtual server 200 and the user information, in a non-volatile memory. At this time, the terminal apparatus 100 may encrypt the user information, including the ID and the password, and may store the encrypted user information.

Then, the terminal apparatus 100 displays, on the screen, a list of VMs from which a user may select a VM which is available via the virtual server 200 which has completed the user authentication. When a plurality of VMs are available via the corresponding virtual server 200, the terminal apparatus 100 may include identification information which relates to the VM selected by the user in conjunction with the previously stored authentication information.

Then, in operation S₅₇₀, when the terminal apparatus 100 requests connecting to the virtual server 200 which has completed the user authentication and establishes a connection to the virtual server 200, the terminal apparatus 100 requests that the connected virtual server 200 use the VM selected by the user. Accordingly, the terminal apparatus 100 can enter a virtual OS environment via the VM established in the virtual server 200.

FIG. 6 is a flowchart which illustrates a method which is executable by a terminal apparatus for reconnecting to a virtual server in a VDI, according to an exemplary embodiment.

As shown in FIG. 6, in operation S610, when the terminal apparatus 100 begins connecting to the virtual server 200, the terminal apparatus 100 periodically checks whether a predetermined event has occurred, and thereby determines whether the mode has converted from an activation mode to a standby mode.

The predetermined event may include an event in which a user command is not received from the user for a predetermined threshold time. When a user command is not received for the predetermined threshold time, the terminal apparatus 100 determines that the terminal apparatus 100 is in an inactivation state, and converts from the activation mode, in which the connection to the virtual server is established, to the standby mode, in which the terminal apparatus 100 is disconnected from the virtual server 200.

The standby mode, in which the terminal apparatus 100 and the virtual server 200 are disconnected from each other, may be any one or more of a state in which the display screen of the terminal apparatus 100 is turned off, a state in which the power supplied to the terminal apparatus 100 is shut off, and/or an activation standby state for preventing power consumption.

Accordingly, when the mode is converted into the standby mode, in operation S620, the terminal apparatus 100 stores mode state information which indicates whether the standby mode is the screen off state, the power off state, or the activation standby state as described above. Then, in operation S630, a determination as to whether a user command to enter the activation mode has been received, and when such a command has been received, in operation S640, the terminal apparatus 100 determines whether the standby mode of the terminal apparatus 100 is a mode which is related to the activation standby state with reference to the previously stored mode state information.

When the standby mode is determined to be a mode which is related to the screen off state or the power off state, the terminal apparatus 100 determines that the input user command includes a command to boot the terminal apparatus 100, and performs a corresponding operation. In operation S650, when the standby mode is determined to be a mode which is related to the activation standby state, the terminal apparatus 100 determines that the input user command includes a command to reconnect to the virtual server 200, and reconnects to the disconnected virtual server based on the previously stored authentication information.

When the terminal apparatus 100 is operated by a general-purpose OS, such as, for example, Window or Linux, the terminal apparatus 100 may re-execute the VDI application in order to enter the VDI, and then reconnect to the disconnected virtual server 200 based on the previously stored authentication information.

According to the exemplary embodiments as described above, when the terminal apparatus 100 returns to the activation mode after having entered the standby mode in the VDI, the terminal apparatus 100 can reconnect to the virtual server 200 without repeating the initial authenticating process which has previously been performed in order to connect to the virtual server 200, so that the user can use the VDI more easily.

The present disclosure has been described with reference to exemplary embodiments.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A control method of a terminal apparatus which uses a virtual machine (VM) of a virtual server in a virtual desktop infrastructure, VDI, the control method comprising:
receiving input of VDI connection information to connect to the virtual server;
connecting to the virtual server based on the received VDI connection information;
determining whether or not a predetermined event occurs in a state in which the terminal apparatus is connected to the virtual server and entering a standby mode; and
when a user command to enter an activation mode is input in the standby mode, reconnecting to the virtual server based on the received VDI connection information.

2. The control method of claim 1, further comprising, when the terminal apparatus connects to the virtual server based on the received VDI connection information, storing authentication information including the received VDI connection information in a non-volatile memory,
wherein the received VDI connection information comprises address information of the virtual server and user information comprising an identification (ID) and a password.

3. The control method of claim 2, wherein the storing the authentication information comprises, when a plurality of VMs are available through the connected virtual server, including identification information on a VM selected by a user in the authentication information and storing the included identification information in the non-volatile memory.

4. The control method of claim 2 or 3, wherein the storing the authentication information comprises encrypting the user information included in the authentication information and storing the encrypted user information.

5. The control method of any one of claims 2 to 4, wherein the reconnecting to the virtual server comprises, when the terminal apparatus is operated using a general-purpose operating system (OS), executing a VDI application to enter the VDI and then reconnecting to the virtual server.

6. The control method of any one of claims 1 to 5, wherein the entering the standby mode comprises storing mode state information indicating whether the standby mode is a screen off state, a power off state, or an activation standby state, and
wherein the reconnecting to the virtual server comprises, when a user command to enter the activation mode is input, reconnecting to the virtual server according to whether or not the standby mode is the activation standby state based on the pre-stored mode state information.

7. A terminal apparatus arranged to use a virtual machine (VM) of a virtual server in a virtual desktop infrastructure (VDI), the terminal apparatus comprising:
an input part configured to receive input of VDI connection information to connect to the virtual server;
a communicator configured to connect to the virtual server based on the received VDI connection information;
a storage configured to store authentication information comprising the received VDI connection information;
a mode converter configured to enter a standby mode according to whether or not a predetermined event occurs; and
a controller which, when the terminal apparatus enters the standby mode in a state in which the terminal apparatus is connected to the virtual server, is configured to reconnect to the virtual server based on the authentication information stored in the storage according to whether a user command to enter the activation mode is input through the input part.

8. The terminal apparatus of claim 7, wherein the storage is a non-volatile memory, and
wherein the received VDI connection information comprises address information of the virtual server and user information comprising an identification (ID) and a password.

9. The terminal apparatus of claim 8, wherein, when a plurality of VMs are available through the connected virtual server, the controller includes identification information on a VM selected by a user in the authentication information and stores the included identification information in the storage.

10. The terminal apparatus of claim 8 or 9, wherein the controller is arranged to encrypt the user information included in the authentication information and stores the encrypted user information in the storage.

11. The terminal apparatus of any one of claims 8 to 10, wherein, when the terminal apparatus is operated using a general-purpose operating system (OS), the controller is arranged to execute a VDI application to enter the VDI and then reconnects to the virtual server.

12. The terminal apparatus of any one of claims 7 to 11, wherein, when the terminal apparatus enters the standby mode through the mode converter, the controller is arranged to store mode state information indicating whether the standby mode is a screen off state, a power off state, or an activation standby state in the storage, and
wherein, when a user command to enter the activation mode is input, the controller is arranged to reconnect to the virtual server according to whether or not the standby mode is the activation standby state based on the mode state information pre-stored in the storage.
